Europäisches Patentamt

European Patent Office

Office européen des brevets

(11) Publication number: **0 190 197**
**B1**

# (12) EUROPEAN PATENT SPECIFICATION

(45) Date of publication of patent specification: **27.09.89**

(21) Application number: **85903556.0**

(22) Date of filing: **24.06.85**

(86) International application number:
**PCT/US85/01215**

(87) International publication number:
**WO 86/01349 27.02.86 Gazette 86/05**

(51) Int. Cl.⁴: **H 02 G 3/06**

(54) UNDERCARPET CABLING FIXTURE.

(30) Priority: **13.08.84 US 639889**

(43) Date of publication of application:
**13.08.86 Bulletin 86/33**

(45) Publication of the grant of the patent:
**27.09.89 Bulletin 89/39**

(84) Designated Contracting States:
**BE DE FR GB IT NL**

(56) References cited:
**EP-A-0 079 638**
**CH-A- 455 900**
**DE-C- 745 916**
**FR-A- 712 618**
**FR-A-1 145 892**
**FR-E- 60 045**
**GB-A-2 120 464**
**US-A-4 404 425**

(73) Proprietor: **AMP INCORPORATED (a New Jersey corporation)**
**P.O. Box 3608 470 Friendship Road**
**Harrisburg Pennsylvania 17105 (US)**

(72) Inventor: **BOWEN, Patrick, Terry**
**York Hill Drive**
**Etters, PA 17319 (US)**

(74) Representative: **Warren, Keith Stanley et al**
**BARON & WARREN 18 South End Kensington**
**London W8 5BU (GB)**

Courier Press, Leamington Spa, England.

**Description**

The invention relates to a fixture for signal transmission members of an undercarpet cable, and specifically, a fixture which provides individual curvilinear channels that support and route the corresponding signal transmission members free from stress as the cable follows along a curved route.

Undercarpet cable is a flat, signal transmission cable with a web containing one or more signal transmission members in the form of electrical conductors or optical fibers that convey power or communications signals. The cable may also contain strengthening members, also called stress-bearing members, extending parallel to the signal transmission members. The cable is laid along a prescribed route against a floor of a building. Carpet is laid on the floor to cover the floor and the cable. Thus, signal transmission cable which is suitable for routing against a floor to be covered by a carpet is called undercarpet cable. There is a requirement to avoid tension or compression stresses from being applied to the signal transmission members, thereby to avoid distortion or other damage. Such stresses are difficult to avoid, for example, when undercarpet cable follows along a curved route, since portions of the cable nearer an axis of curvature are placed in compression, and portions of the cable farther from the axis of curvature are placed in tension.

U.S. Patent 4,419,538 discloses elongated stress-bearing members and a single electrical conductor within a jacket of an undercarpet cable. The stress-bearing members are free to move longitudinally with respect to the jacket to relieve stretching or compression stresses which might be transmitted to the electrical conductor. A disadvantage is that the stress-bearing members tend to emerge or retract with respect to an end of the jacket. A further disadvantage is that the stress-bearing members are subject to constraint by the cable to maintain constant parallel spacing from one another. If the cable follows along a curved route having a relatively small radius of curvature, the stress-bearing members are subjected to stretching or compression stresses due to their constraint by the cable or due to the individual stress-bearing member being bent with an excessively short radius of curvature.

British Published Specification No. 24,533, November 14, 1908, discloses a fixture in which unsevered lengths of conductors are routed in arcuate channels. One of the conductors is in a zig-zag route from one side of a channel to the other side of the channel. The channel does not restrain the conductor from being subject to an excessively short radius of curvature along the zig-zag route.

The present invention consists in a fixture for elongate members of an undercarpet cable comprising a web, elongate edge margins connected to the web, and channels in the web for supporting the elongate members along a curved route for the undercarpet cable, the channels being parallel to each other at their ends at edge margins of the web, characterized in that the channels extend along a surface of the web and are curvilinear along their lengths, one of the channels defining an arcuate path, each subsequent channel being spaced radially inwardly at varying distances from the arcuate channel and having a length between opposite ends equal to that of the arcuate channel.

A fixture according to the invention for signal transmission members of an undercarpet cable provides individual curvilinear channels that support and route corresponding signal transmission members free from stress as the cable follows along a curved route. The channels alternatively may support and route strengthening members of an undercarpet cable. Thus, signal transmission members and strengthening members of an undercarpet cable are collectively called elongated members. The elongated members, which first are separated from the confines of the cable, are supported along respective channels. The outer most channel farthest from the axis of curvature of a curved route of the cable is arcuate along its length. Each additional channel is sinuous along its length and may project toward or away from the adjacent channel. One advantage of the invention is that the elongated members are unsevered as the cable follows along a curved route. Another advantage is that none of the elongated members supported by the fixture are shortened in length or bent with an excessively short radius of curvature. Thus, the signal transmission members have equal transmission path lengths. Another advantage is that the elongated members are not constrained to remain parallel to one another and are spaced apart by the channels with varying distances therebetween, thereby enabling the cable to follow along a curved route having a relatively small radius of curvature.

The invention will now be described by way of example with reference to the accompanying drawings in which:

Figure 1 is a perspective view of the subject fixture with a prepared undercarpet cable exploded therefrom;

Figure 2 is a perspective view, similar to Figure 1, with the cable in place in the subject fixture;

Figure 3 is a top plan view of the subject fixture with the cable in place; and

Figure 4 is a section through the subject fixture taken along line 4—4 of Figure 3.

A fixture 10 is shown in the drawings in conjunction with an undercarpet cable 12 having two elongated members 14, 16, which are optical fibers. The optical fibers 14, 16 are carried in a central web 32 with tapered marginal flanges 34, 36 to each side of the central web. Such cable is of well-known design and need not be discussed in further detail.

The fixture 10 will receive the elongated members of the cable and provide both support and protection for the elongated members throughout the length of the turn. The fixture is a formed rigid member defining at least two tracks between an inlet and an outlet spaced apart in a plane and angularly offset with respect to each other. One of the tracks defines an arcuate path. Each subsequent track is radially inwardly spaced from the arcuate track and defines a curvilinear path of equal length to the length of the arcuate outer path.

The fixture 10 can be utilized with undercarpet cables of various forms, for example, cables carrying electrical conductors of single strand, multiple strand or carrying coaxial configurations or carrying strengthening members. Further, the fixture 10 is not restricted to the number of fibers, conductors or strength members, which can be handled by the fixture.

The fixture 10 is a rigid member, preferably of insulative plastic material, which can be molded or machined. The fixture 10 has a low, rather flat, transverse profile with an entry end 18 and an exit end 20 angled with respect to each other in the plane of the fixture to define a generally arcuate member. The fixture has elongate edge margins in the form of an outer arcuate tapered shoulder 22 and an inner curvilinear tapered shoulder 24 on opposite sides of a profiled central web 26. The central web includes a curvilinear, arcuate outer track or channel 28 and at least one inner curvilinear track or channel 30. The overall curvlinear lengths of the channels 28 and 30 are equal or identical.

The inner track or channel 30 preferably is formed by a plurality of connected curvilinear segments. The end-most segments curve inwardly in a direction to separate the tracks or channels 28, 30 transversely and to facilitate molding of the fixture 10. An arcuate intermediate segment is connected to the end-most segments. The inner channel or track configuration need not be truly a sinusoidal configuration but is sinuous and simulates a sinusoidal appearance. It should be noted that, if there are additional inner tracks or channels, each would be inwardly and transversely spaced from the track or channel 30 and would differ only by the radiuses and dimensions forming the various segments. Each such additional track or channel would still have the requirement of having a total linear length equaling the linear length of the outer channel 28.

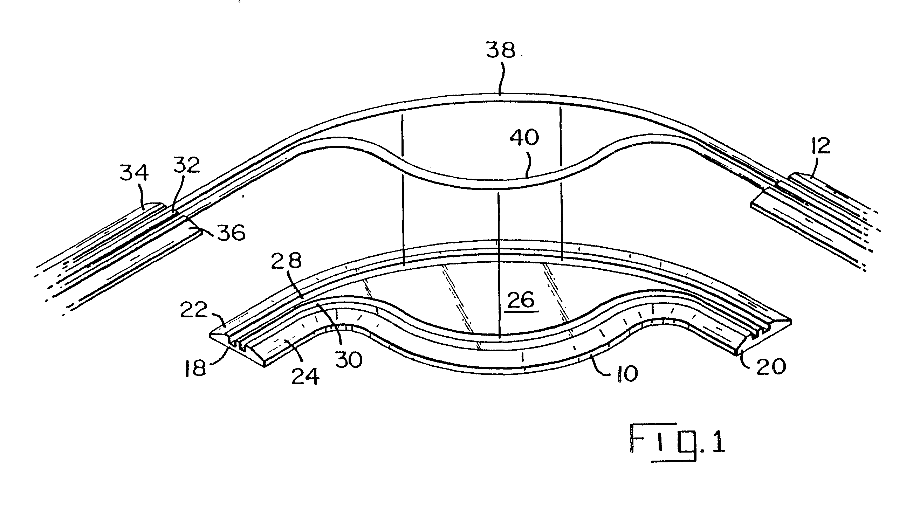

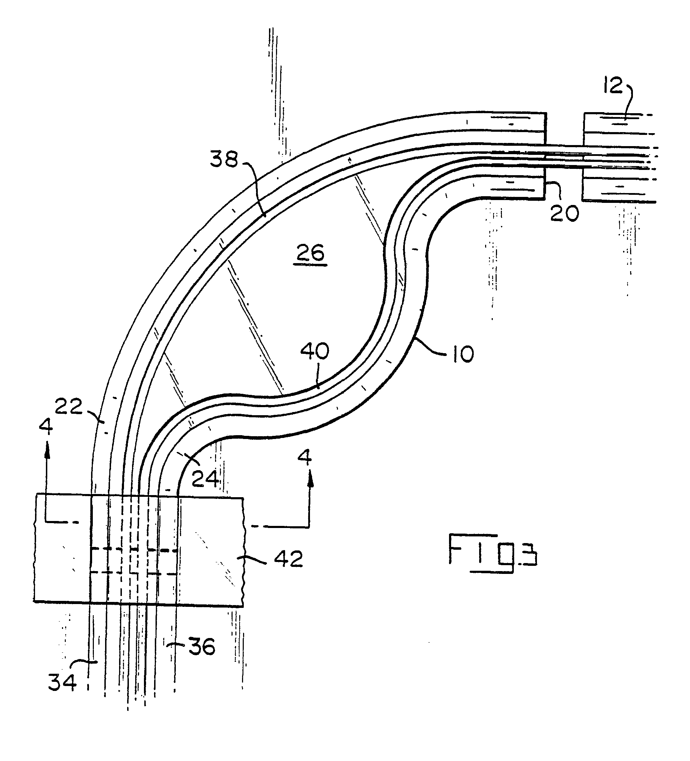

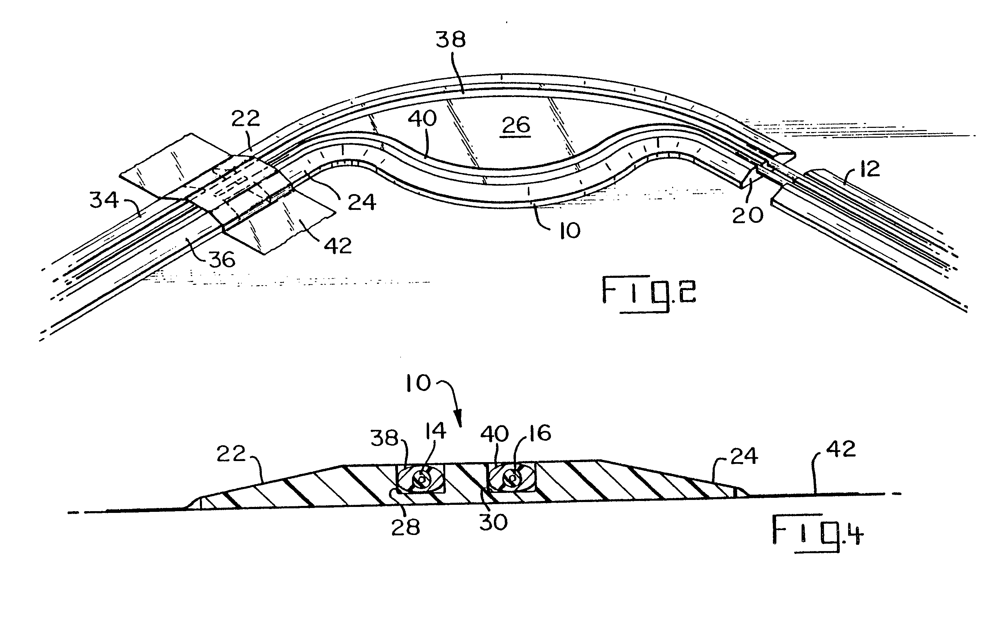

The present invention is utilized by first preparing a length of the cable 12 as shown in Figure 1. The tapered marginal flanges 34, 36 are removed and much of the central web 32 is also removed to leave only portions 38, 40 of the web 32 which carry the elongate members 14, 16. The portions 38, 40 are then placed in respective tracks 28, 30 of the fixture 10, as shown in Figures 2 and 3, and are preferably secured in place by the application of an adhesive tape 42. It will be noted from Figure 2 that it is not critical that the length of cable prepared be exactly the length of the fixture.

A cable is prepared by stripping the tapered marginal flanges and central web of said cable to free the elongate members carried thereby. Then the fixture 10 is utilized by, placing the freed elongate members into individual tracks in the fixture 10 and by securing said cable at the ends of said fixture.

The fixture 10 has an entry end and an exit end angularly offset with respect to each other and having respective profiles similar to the transverse profile of the cable 12.

The first arcuate track 28 formed in said fixture extends from said entry end (18) to said exit end (20).

At least one second track 30 formed in the fixture radially inwardly of said arcuate track 28 has a curvilinear length between said entry and said exit ends (18, 20) such that the overall length of each said second track 30 equals that of said arcuate track 28.

The fixture 10 has tapered marginal portions 22 and 24 to each side of said fixture 10 whereby the transverse profile of the cable is approximated throughout the fixture.

It should also be noted that the present example is shown making a 90 degree turn. The present invention is not restricted to any particular angle and could be more or less than 90 degrees as the situation determines.

For example, the entry and exit ends of said fixture 10 may be angled 45 degrees with respect to each other.

The subject fixture 10 may be provided with hold down means (not shown) or can be secured in place by means of adhesives (also not shown).

## Claims

1. A fixture (10) for elongate members of an undercarpet cable comprising a web (26), elongate edge margins (22, 24) connected to the web, and channels in the web for supporting the elongate members along a curved route for the undercarpet cable, the channels being parallel to each other at their ends at edge margins of the web, characterized in that the channels (28, 30) extend along a surface of the web (26) and are curvilinear along their lengths, one of the channels (28) defining an arcuate path, each subsequent channel (30) being spaced radially inwardly at varying distances from the arcuate channel (28) and having a length between opposite ends equal to that of the arcuate channel (28).

2. A fixture as recited in claim 1, characterized in that each subsequent channel (30) is sinuous along its length.

3. A fixture as recited in claim 1 or 2, characterized in that the channels (28, 30) extend from a first end (18) of the fixture (10) to a second end (20) of the fixture (10), and the second end (20) is angularly offset in the plane of the fixture (10) from the first end (18).

4. A fixture as recited in any preceding claim, characterized in that a subsequent channel (30) comprises a plurality of curvilinear segments, endmost segments curving inwardly to separate the subsequent channel (30) from the one channel (28), and an arcuate intermediate segment connecting the endmost segments.

**Patentansprüche**

1. Halterung (10) für längliche Elemente eines unter einem Teppich zu verlegenden Kabels, mit einem Flachstück (26), mit dem Flachstück verbundenen Längskanten-Rändern (22, 24), und mit Kanälen in dem Flachstück zum Halten der länglichen Elemente entlang einer gewundenen Bahn für das unter einem Teppich zu verlegende Kabel, wobei die Kanäle, an ihren Enden an Randgrenzen des Flachstücks zueinander parallel sind, dadurch gekennzeichnet, daß die Kanäle (28, 30) sich längs einer Oberfläche des Flachstücks (26) erstrecken und entlang ihrer Länge krummlinig verlaufen, wobei einer der Kanäle (28) eine bogenförmige Bahn definiert und jeder folgende Kanal (30) von dem bogenförmigen Kanal (28) mit sich ändernden Distanzen in Richtung radial nach innen beabstandet ist und zwischen entgegengesetzten Enden eine Länge aufweist, die der Länge des bogenförmigen Kanals (28) gleich ist.

2. Halterung nach Anspruch 1, dadurch gekennzeichnet, daß jeder folgende Kanal (30) entlang seiner Länge wellenförmig verläuft.

3. Halterung nach Anspruch 1 oder 2, dadurch gekennzeichnet, daß die Kanäle (28, 30) sich von einem ersten Ende (18) der Halterung (10) zu einem zweiten Ende (20) der Halterung (10) erstrecken und das zweite Ende (20) von dem ersten Ende (18) in der Ebene der Halterung (10) winkelmäßig versetzt ist.

4. Halterung nach einem der vorausgehenden Ansprüche, dadurch gekennzeichnet, daß ein folgender Kanal (30) eine Mehrzahl von krummlinigen Segmenten umfaßt, wobei an den Enden befindliche Segmente nach innen gekrümmt sind, um den folgenden Kanal (30) von dem einen Kanal (28) zu trenne, und ein bogenförmiges mittleres Segment die Endsegmente miteinander verbindet.

**Revendications**

1. Accessoire (10) pour les organes longs d'un câble sous moquette comprenant une nappe (26), des marges latérales longues (22, 24) reliées à la nappe et des canaux dans la nappe pour supporter les organes longs sur un trajet courbe pour le câble sous moquette, les canaux étant parallèles entre eux à leurs extrémités aux marges latérales de la nappe, caractérisé en ce que les canaux (28, 30) s'étendent sur une face de la nappe (26) et sont curvilignes sur leur longueur, l'un des canaux (28) définissant un trajet arqué, chaque canal suivant (30) étant écarté radialement vers l'intérieur à diverses distances du canal arqué (28) et ayant entre les extrémités opposées une longueur égale à celle du canal arqué (28).

2. Accessoire suivant la revendication 1, caractérisé en ce que chaque canal suivant (30) est sinueux sur sa longueur.

3. Accessoire suivant la revendication 1 ou 2, caractérisé en ce que les canaux (28, 30) s'étendent d'une première extrémité (18) de l'accessoire (10) à une seconde extrémité (20) de l'accessoire (10) et la seconde extrémité (20) est décalée angulairement de la première extrémité (18) dans le plan de l'accessoire (10).

4. Accessoire suivant l'une quelconque des revendications précédentes, caractérisé en ce qu'un canal suivant (30) comprend plusieurs segments curvilignes, les segments d'extrémité se courbant vers l'intérieur pour écarter le canal suivant (30) du premier canal (28), et un segment intermédiaire arqué reliant les segments d'extrémité.

Fig.1

38

26

40

10

22

4

24

4

42

36

34

12

20

Fig3

38

22

34

36 24

42

26

40

10

20

12

Fig.2

10

22

38 14 40 16

24 42

28 30

Fig.4

EP 0 190 197 B1